Europäisches Patentamt

European Patent Office

Office européen des brevets

(19)

(11) Numéro de publication: **0 378 010**

**A1**

(12) # DEMANDE DE BREVET EUROPEEN

(21) Numéro de dépôt: **89400058.7**

(22) Date de dépôt: **10.01.89**

(51) Int. Cl.5: **C04B 9/00**

Le titre de l'invention a été modifié (Directives relatives à l'examen pratiqué à l'OEB, A-III, 7.3)

(43) Date de publication de la demande:
**18.07.90 Bulletin 90/29**

(84) Etats contractants désignés:
**AT DE NL SE**

(71) Demandeur: **CENTRE SCIENTIFIQUE ET TECHNIQUE DU BATIMENT**
**4, avenue du Recteur Poincaré**
**F-75782 Paris Cédex 16(FR)**

(72) Inventeur: **Roux, Gabriel**
**7, rue des Lilas**
**F-38240 Meylan(FR)**
Inventeur: **Balme, André**
**Allée des Mésanges Charvinière 5**
**F-38330 St Ismier(FR)**
Inventeur: **Buriot, Eric**
**10, rue J.Bouchayer**
**F-38100 Grenoble(FR)**
Inventeur: **Rubaud, Marcel**
**Les Effarons**
**Montbonnot F-38330 St. Ismier(FR)**
Inventeur: **Fumez, André**
**Le Bourg d'en Haut**
**F-74890 Bons en Chablais(FR)**
Inventeur: **Hamelin, Patrice Villa la Cartna**
**Chemin de Mary Polemieux au Mont d'Or**
**F-69250 Neuville Saone(FR)**

(74) Mandataire: **Portal, Gérard et al**
**Cabinet Beau de Loménie 55, rue d'Amsterdam**
**F-75008 Paris(FR)**

(54) **Ciments magnésiens et liants à prise accélérée et à tenue à l'eau modifiée obtenus à partir de tels ciments et matériau obtenu avec un tel liant.**

(57) L'invention concerne un ciment magnésien.

Ce ciment magnésien comprend un sel de magnésium, de la magnésie, auxquels on ajoute de l'eau de prise, et est caractérisé en ce que le sel de magnésium est un sel de magnésium partiellement hydraté de préférence ayant un taux d'hydratation moyen, exprimé en molécules d'eau par molécule de sel de magnésium, compris entre environ 0 et environ 5, de préférence entre environ 2 et environ 4.

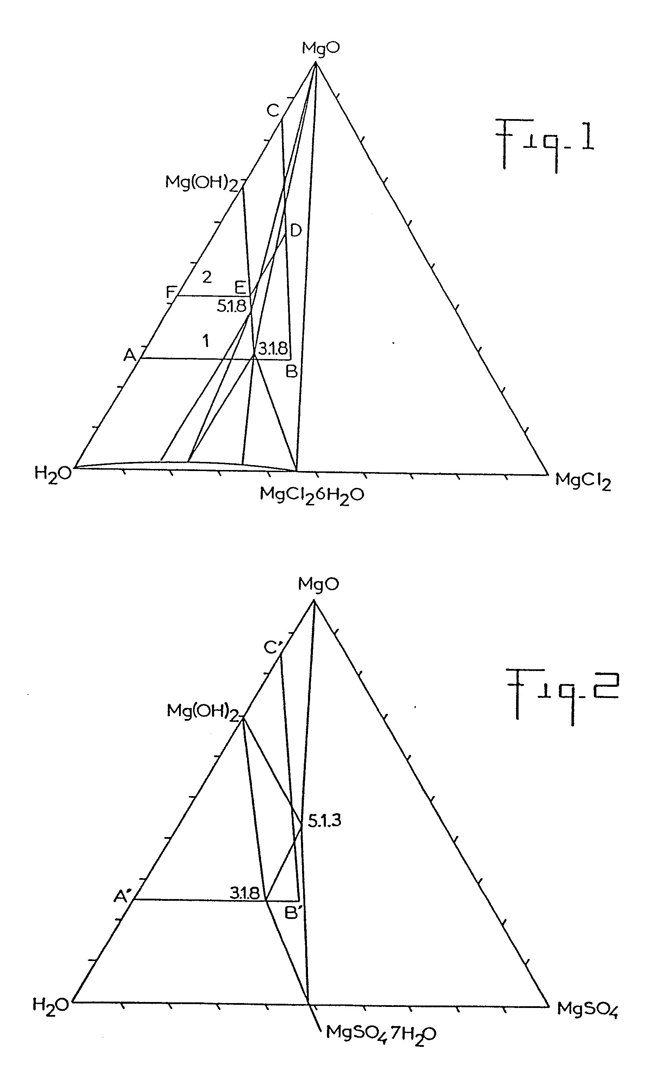

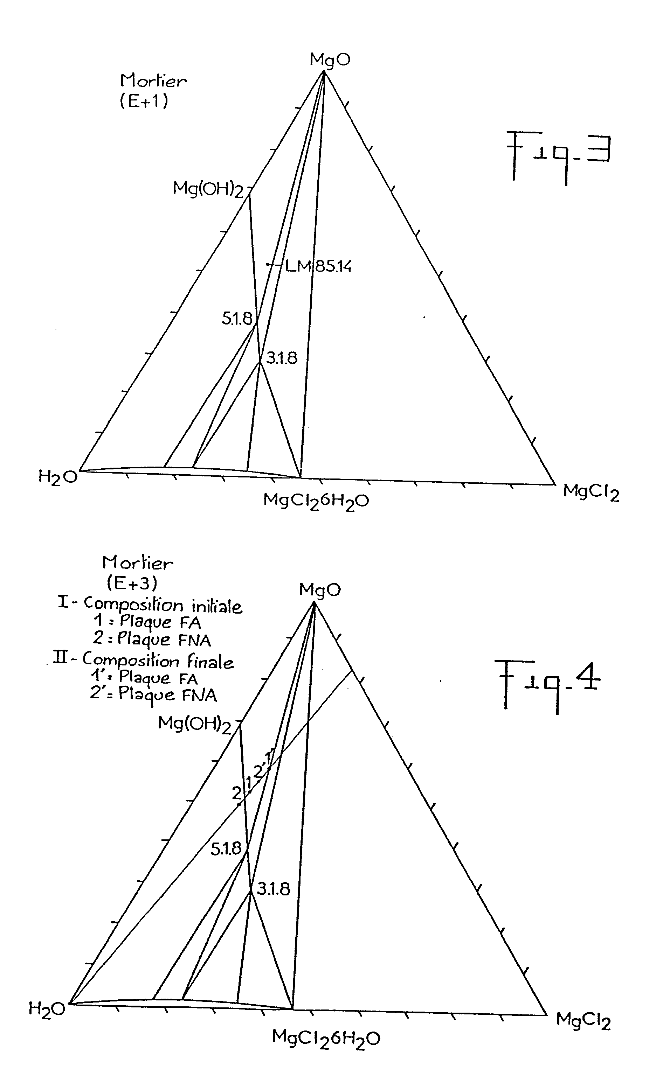

Avec ce ciment, on réalise un liant hydraulique dont la proportion relative du sel de magnésium, de la magnésie et de l'eau est définie par le domaine n° 1, de préférence par le domaine n° 2, du diagramme ternaire $MgO$-$MgCl_2$-$H_2O$, figure 1 ou le domaine n° 1 du diagramme ternaire $MgO$-$MgSO_4$-$H_2O$, figure 2.

On obtient ainsi un temps de prise réduit (domaine n° 1 pour oxychlorure ou oxysulfate) et une meilleure tenue à l'humidité (domaine n° 2 pour liants aux oxychrlorures).

EP 0 378 010 A1

Fig. 1

**Ciments magnésiens comprenant un sel de magnésium partiellement déshydraté, et une magnésie très réactive, liants magnésiens à prise accélérée et à tenue à l'eau améliorée obtenus à partir de tels ciments, et matériau obtenu avec un tel liant magnésien, non expansé ou expansé.**

La présente invention concerne essentiellement des ciments magnésiens comprenant un sel de magnésium partiellement déshydraté,et une magnésie très réactive, liants magnésiens à prise accélérée et à tenue à l'eau améliorée obtenus à partir de tels ciments, et matériau obtenu avec un tel liant magnésien, non expansé ou expansé.

On connaît déjà des liants magnésiens comprenant un sel de magnésium, de la magnésie et de l'eau, pour former des produits utilisables notamment dans le bâtiment. Selon les proportions des divers composants de base, les produits obtenus présentent des caractéristiques différentes. Comme sel de magnésium, on utilise habituellement un sulfate de magnésium hydraté ($MgSO_4$, $7H_2O$) ou un chlorure de magnésium hydraté ($MgCl_2$, $6H_2O$).

Ainsi, il a été décrit dans le document FR-A-2 479 182 un procédé d'élaboration de parements de revêtements pour les éléments de construction, ainsi que les éléments de construction obtenus par application de ce procédé. Selon le procédé décrit, la résine hydraulique est constituée à partir d'un mélange comprenant de 20 à 30 % de chlorure de magnésium et de 70 à 80 % d'oxyde de magnésium auxquels on ajoute une quantité d'eau variable aussi faible que possible pour obtenir un mélange coulable et moulable (page 2, lignes 26 à 31 et revendication 2). La prise par formation d'oxychlorure est obtenue par un apport de chaleur extérieure compris notamment entre 40 et 50° C (page 2, lignes 24-25 et revendication 1).

On indique que par cet apport de chaleur extérieure, on accélère le temps de prise depuis un temps d'environ 48 h à l'air libre jusqu'à un temps de prise compris entre 4 et 6 h (page 4, lignes 5 à 11).

Il est indiqué que le produit obtenu se caractérise par une grande dureté, un aspect à grains fins, une stabilité dimensionnelle remarquable, un retrait extrêmement faible lors de la réticulation et des propriétés ignifugeantes (page 4, lignes 12 à 25).

On indique en outre qu'il est avantageux d'introduire des charges telles que sable, latérite, carbonate de calcium, poudre de marbre, le pourcentage d'incorporation étant en général de 25 à 30 % (page 4, lignes 26 à 29).

Ainsi, l'enseignement de ce document consiste en un raccourcissement du temps de prise par un chauffage extérieur du liant magnésien comprenant un chlorure de magnésium classique, c'est-à-dire un chlorure de magnésium hydraté ($MgCl_2$, $6H_2O$).

Un perfectionnement à ce procédé a été décrit dans le document FR-A-2 487 816. Selon ce procédé perfectionné, on provoque une réaction exothermique importante permettant d'atteindre une température de l'ordre de 150° C dans une période de temps comprise notamment entre 1 et 3 h (page 2, lignes 4 à 11 et revendication 1).

Le moyen qui permet de réaliser cette réaction exothermique est soit une émission ultrasonique sous 20 kHz et sous une amplitude comprise entre 5 et 40 $\mu$m (exemple 1), soit un rayonnement ultraviolet d'une part, sous grandes ondes, d'autre part sous petites ondes (exemple 2), soit encore une activation chimique par addition d'un mélange d'acide chlorhydrique et d'un produit oxydant, tel que par exemple l'eau de Javel, dans une proportion de l'ordre de 15 à 30 % (exemple 3).

D'autre part, il a été proposé dans le document FR-A-2 499 550 une composition minérale moussante, en particulier une résine minérale à base d'oxychlorure ou d'oxysulfate de magnésium, se présentant sous forme d'une pâte minérale prête pour l'expansion caractérisée par un mélange de chlorure ou de sulfate de magnésium, d'eau, d'oxyde de magnésium, d'un agent formateur de mousse et de noir de carbone.

Dans l'état de la technique antérieure, le sel de magné sium est toujours sous forme classique, c'est-à-dire hydraté ($6H_2O$ pour $MgCl_2$ ou $7H_2O$ pour le sulfate).

Par ailleurs, dans les formulations de liants magnésiens de l'état de la technique antérieure, le temps de prise est relativement élevé, de sorte qu'on a recherché à diminuer ce temps de prise par apport extérieur de chaleur (FR-A-2 487 816) sans pour autant réduire ce temps de prise à un temps minimum.

Par ailleurs, la tenue à l'humidité du matériau obtenu laisse encore à désirer dans certains cas.

La présente invention à donc pour but de résoudre le nouveau problème technique consistant en la fourniture d'un nouveau ciment magnésien permettant de préparer un liant magnésien à prise accélérée, c'est-à-dire ayant un temps de prise réduit, même à température ambiante, de quelques minutes à 1 h environ.

La présente invention a encore pour but de résoudre le nouveau problème technique consistant en la fourniture d'un nouveau ciment magnésien permettant de préparer un liant magnésien présentant une tenue à l'humidité améliorée.

Enfin, la présente invention a encore pour but de résoudre le nouveau problème technique consistant en la fourniture d'un ciment magnésien permettant de préparer un nouveau liant magnésien à prise accélérée, à tenue à l'humidité élevée présentant simultanément d'excellentes propriétés mécaniques.

Tous ces problèmes techniques sont résolus simultanément par la présente invention par la fourniture d' un ciment magnésien, à prise accélérée, constituée essentiellement d'un mélange du type ternaire comprenant comme composants actifs au moins un sel de magnésium et de la magnésie auxquels on ajoute de l'eau de prise, caractérisé en ce que le sel de magnésium est un sel de magnesium partiellement déshydraté, de préférence un sel de magnésium ayant un taux d'hydratation moyen, exprimé en molécules d'eau par molécule de sel de magnésium, compris entre 0 et environ 5, encore de préférence compris entre environ 2 et environ 4.

Comme sel de magnésium, on utilise de préférence un chlorure de magnésium ou un sulfate de magnésium.

Ce sel de magnésium partiellement déshydraté peut être obtenu par tout procédé connu de déshydratation de sel. Ces sels anhydres ou partiellement déshydratés peuvent être préparés en étuve statique ou dans des fours rotatifs brassant le produit dans un courant d'air chaud à environ 100° C, pendant un temps suffisant pour obtenir le taux d hydratation moyen désiré, ou par coupage avec des produits de taux d'hydratation différents.

De préférence, le second composant du ciment magnésien selon l'invention est constitué par de la magnésie caustique qui est de préférence une magnésie très réactive présentant un indice d'iode supérieur ou égal à 30 mg $I_2$/g de magnésie et un $\Delta T < 25°$ C déterminé par un test à l'eau oxygénée selon la méthode suivante :
- ajouter 2 g de magnésie dans un bécher de 50 ml contenant 10 ml de $H_2O_2$ à 30 % agiter à la main pendant 5 secondes, relever l'accroissement de température de la solution - essai fait à la température de laboratoire 23-25° C - .

Selon encore un mode de réalisation davantage préféré, la magnésie présente les caractéristiques suivantes :
- une réactivité mesurée par l'indice d' absorption d'iode selon la norme NFT 45006 supérieure à 30 mg $I_2$/g de magnésie
- une surface spécifique de 20 à 40 m²/g déterminée par la méthode BET
- une densite apparente sans tassage supérieure à 0,8.

L'invention concerne aussi les liants magnésiens obtenus avec le ciment précité auquel on ajoute de l'eau de prise obtenus par gâchage de la formulation sèche du ciment avec l'eau de prise.

L'eau utilisée pour le mélange en vue de la préparation d'un liant magnésien est avantageusement voisine de la neutralité et peut éventuellement être chauffée pour accélérer la réaction, surtout lorsque la température extérieure est trop froide comme en hiver.

Selon un mode de réalisation particulièrement préféré, des proportions relatives du sel de magnésium partiellement déshydraté invention, de la magnésie et de l'eau de prise sont comprises dans les domaines A B C et A' B' C' des diagrammes ternaires correspondant au domaine n° 1 de la figure N° 1 ou de la figure n° 2, annexées.

De préférence, les proportions relatives sont comprises dans le domaine plus restreint C D E F du diagramme ternaire, ce domaine plus restreint correspondant au domaine n° 2 de la figure n° 1, ce domaine plus restreint permettant d'obtenir non seulement une prise accélérée, mais aussi une tenue à l'humidité améliorée par une réduction de la solubilité. Cette réduction de la solubilité résulte du déplacement de la composition finale vers la brucite ($Mg(OH)_2$), minérale quasi insoluble.

L'invention concerne aussi un procédé de préparation d'un ciment magnésien à prise accélérée constitué essentiellement d'un mélange de type ternaire comprenant comme composants actifs au moins un sel de magnésium, de la magnésie, auxquels on ajoute de l'eau de prise, caractérisé en ce qu'on utilise comme sel de magnésium, un sel de magnésium partiellement déshydraté, de préférence un sel de magnésium ayant un taux d'hydratation moyen, exprimé en molécules d'eau par molécule de sel de magnésium, compris entre 0 et environ 5, encore de préférence compris entre environ 2 et environ 4.

De préférence, on utilise de la magnésie caustique très réactive, ayant un indice d'iode supérieur à 30 mg $I_2$/g de magnésie et un $\Delta T < 25°$ C déterminé par un test à l'eau oxygénée.

D'autres buts, caractéristiques et avantages de l'invention apparaîtront clairement à l'homme du métier à la lumière de la description explicative qui va suivre faite enréférence à plusieurs exemples et aux dessins annexés représentant respectivement :
- pour la figure 1, le diagramme ternaire $MgO$-$MgCl_2$-$H_2O$, sur lequel on a représenté le domaine préféré de proportions relatives définies par les lettres A, B, C (domaine n° 1), pour lequel on obtient une prise particulièrement accélérée du liant magnésien, ainsi que le domaine restreint encore plus préféré n° 2 défini par les lettres C-D-E-F, pour lequel la prise est particulièrement accélérée, et la tenue à l'humidité est particulièrement améliorée par l'obtention d'une solubilité dans l'eau réduite.

- La figure 2 représente le diagramme ternaire analogue obtenu avec MgO-MgSO₄-H₂O, avec le domaine n° 1 précité défini par les lettres A′-B′-C′.

- La figure 3 représente la composition ternaire LM85.14 obtenue à l'exemple 1.

- La figure 4 représente les compositions ternaires obtenues avec une plaque type FA (n° 1) et une plaque type FNA (n° 2) sur la base des compositions initiales de l'exemple 3. Les points 1′ et 2′ représentent les compositions ternaires finales recalculées à partir des compositions minéralogiques.

- La figure 5 représente le diffractogramme du mortier selon l'exemple 4 de liant, ayant une composition de brucite.

Dans les exemples suivants, les pourcentages sont donnés en poids et les températures en degré Celcius, sauf indication contraire.

Exemple 1 selon l'invention

Composition de liant magnésien référencé LM85-14.

Dans cet exemple, on prépare un liant magnésien à faible teneur en sel de magnésium, à prise accélérée par utilisation du ciment selon l'invention constitué ici d'un chlorure de magnésium partiellement déshydraté, à 4 molécules d'eau ainsi qu'une magnésie naturelle très réactive.

Les caractéristiques du chlorure de magnésium sont les suivantes :

CARACTERISTIQUES DU CHLORURE DE MAGNESIUM PARTIELLEMENT DESHYDRATE SELON L'INVENTION

Il s'agit d'un chlorure de magnésium partiellement déshydraté à 4 molécules d'eau en moyenne, exprimé en nombre de molécules d'eau par molécule de chlorure de magnésium. Ce sel est obtenu par déshydratation de plaquettes de bischofite de formule $MgCl_2 6H_2O$ en étuve à une température inférieure à 100°C pendant 7 h, ce qui permet d'obtenir un état d'hydratation de $4H_2O$ (43 % d'eau liée).

Ce sel est réduit en poudre très fine pour faciliter la dispersion.

On utilise comme second composant du ciment magnésien selon l'invention une magnésie naturelle très réactive ayant les caractéristiques suivantes :

CARACTERISTIQUES DE LA MAGNESIE

. Référence commerciale : MG2.150 de la société GUYON S.A.
. Origine : Grèce
. Magnésie caustique.
. Indice d'absorption d'iode 48 mgI₂/g de magnésie.
. Surface spécifique blaine (0,65 de porosité) = 172 m²/g, BET = 30 m²/g.
. Densité de grain 3.1 (picnométrie au CCl₄).
. Composition minéralogique :
. quartz = 7 %
. olivine (silicate ferromagnésien) = 10,5 %
. périclase = 82,5 %
. Granulométrie : 75 % passage à 40 μ.
. Masse volumique 0,84 g/cm³.
Cette magnésie pouvant être de qualité variable, il est important de vérifier qu'elle répond aux caractéristiques préférées énoncées ci-dessus
On réalise une formulation de liant magnésien selon les proportions suivantes :

4

| Formulation | | |
|---|---|---|
| Produits secs : | magnésie (décrite ci-dessus) | 56,94 % |
| | MgCl₂4H₂O (décrit ci-dessus) | 20,68 % |
| Eau neutre : | | 22,34 % |

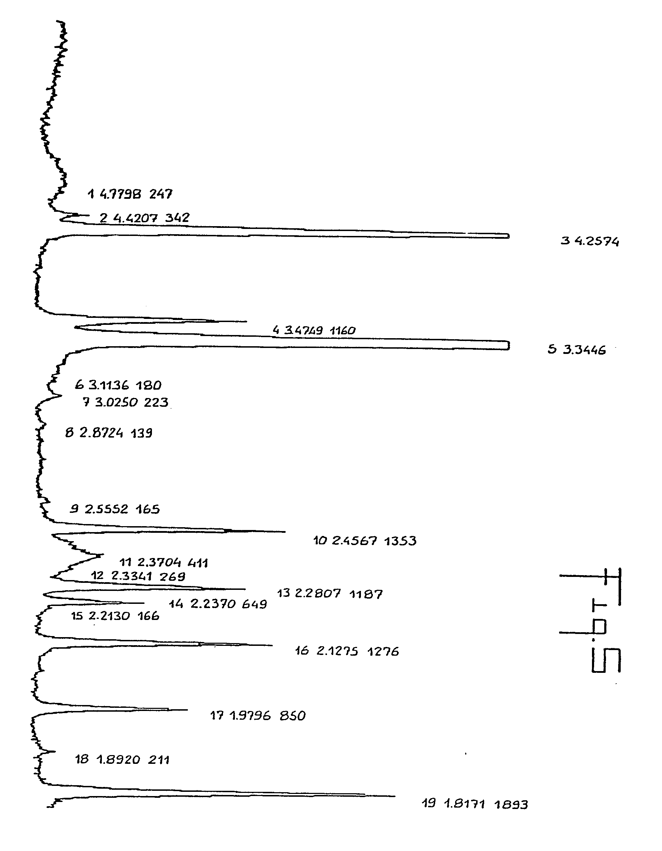

On procède alors à un mélange des différents composants de la formulation par addition progressive de l'eau dans les produits secs, avec un gachage concomitant, pour obtenir une formulation de liant magnésien coulable ou moulable permettant d'obtenir une composition ternaire référencée LM85.14 mentionnée dans le diagramme ternaire $MgO-MgCl_2-H_2O$ à la figure 3, qui est la suivante, compte tenu d'une teneur en périclase de 82,5 % pour la magnésie et d'un taux de sel sec de 57 % dans $MgCl_24H_2O$ :

$MgO$ = 52,18 ;

sel = 13,08 ;

$H_2O$ = 34,73.

La vitesse de prise est de 6 min et la température maximale atteinte est de 180° C en 9 min.

La composition minéralogique donnée par un diagramme de diffraction aux rayons X est la suivante :

28,6 % de $MgO$ (exprimé en périclase),

41,36 % de $Mg(OH)_2$ (exprimé en brucite),

30 % d'oxychlorure 5.1.8.

On obtient avec ce liant magnésien selon l'invention, après la prise, une résistance en compression de 91 MPa.

La solubilité est plafonnée à 5 % après 5 cycles alternant 24 h en immersion dans l'eau/24 h atmosphère sèche (à 30° C).


Exemple 2 selon l'invention


Liant magnésien expansé référencé LME1.2456.


Pour préparer ce liant magnésien expansé, on utilise le même sel $MgCl_24H_2O$ utilisé à l'exemple 1 ainsi que la même magnésie que celle utilisée à l'exemple 1, selon les proportions suivantes du mélange initial :

Composition du mélange initial :

60,6 de magnésie de l'exemple 1 : en pourcentage des réactants ;

19,8 de $MgCl_24H_2O$ de l'exemple 1, et

19,5 de $H_2O$,

ce qui, exprimé en pourcentage du diagramme ternaire, donne les proportions suivantes :

55,2 de $MgO$ (magnésie)

12,9 de $MgCl_2$

31,9 de $H_2O$.

On procède à l'ajout de l'eau dans le mélange des poudres de magnésie et de sel, avec gâchage puis on ajoute pour l'expansion un mélange de :

1,17 % d'une solution de tensioactif, type polyamine de poids moléculaire élevé,

0,3 % de $MnO_2$ pulvérisé,

1,17 % de $H_2O_2$ 110 volumes

(ces proportions étant données en poids par rapport au mélange total initial), ce qui provoque un dégagement d'oxygène dans la composition mélangée, provoquant une expansion du liant magnésien.

La prise est obtenue en 1 h environ en obtenant une température maximale de 120° C.

La composition minéralogique du liant magnésien expansé solidifié est la suivante :

Composition minéralogique :

- périclase (exprimé en $MgO$) = 3,2 %

- brucite ($Mg(OH)_2$) = 25,2 %

- composition ternaire 5.1.8 = 42,6 %

- composition ternaire 3.1.8 = 29,0 %

La résistance en compression obtenue avec des barres de dimensions 3 cm x 3 cm x 3 cm est de 5 MPa.

La densité est de 0,54.

La solubilité est plafonnée à une perte de poids de 10 % après alternance de séjour dans l'eau et d'un séchage, selon le cycle d'essor de l'exemple 1.

Exemple 3 de l'invention

Préparation de mortier avec un chlorure de magnésium, pour la réalisation de plaques référencées FNA-FA.

On utilise la même magnésie que celle utilisée à l'exemple 1 de référence Mg 2.150.

On utilise également comme sel de magnésium partiellement hydraté un mélange de chlorure de magnésium anhydre et de chlorure de magnésium hexahydrate en proportion relative en poids respectivement de 48 % et 52 % donnant un état d'hydratation moyen $2H_2O$ (27,4 % en poids).

Ce sel est pulvérisé pour obtenir une bonne dispersion.

On utilise comme charge à la préparation du mortier du sable siliceux de granulométrie moyenne égale à 0,4 mm, ayant un indice de finesse AFA42, référence SIKA HOSTUN RF.

On prépare une formulation de mortier de référence FA ayant la composition suivante :

Formulation de FA

Liant 55 %      Sable 45 %
Composition du liant :
. magnésie selon l'exemple 1 = 57 %
. $MgCl_2$ "$2H_2O$" en moyenne = 14,2 %
. $H_2O$ = 28,8 %

Compte tenu que la magnésie contient 82,5 % de périclase, on obtient une composition ternaire :
$MgO$ = 52,2 $MgCl_2$ = 11,5 - $H_2O$ = 36,3.

On prépare aussi une formulation de référence FNA de composition suivante :

Formulation de FNA

Liant 64,5 %      Sable 35,5 %
Composition du liant :
. magnésie = 54,2 %
. $MgCl_2 2H_2O$ en moyenne = 13,5 %
. $H_2O$ = 32,3 %

La composition ternaire ainsi obtenue compte tenu de la pureté de la magnésie est donc :
$MgO$ = 49,4 - $MgCl_2$ = 10,8 - $H_2O$ = 39,8.

Avec chaque formulation, on prépare de la manière habituelle, par coulage ou moulage, après mélange des composants et gâchage ou brassage, des plaques de faible épaisseur (environ 5 et 7 mm) constituées par du mortier magnésien à prise activée. Des plaques réalisées de grande taille ne sont pas déformées après la prise, la composition du liant étant la même. La plaque la plus chargée en silice FA a été placée en extérieur aux intempéries.

En deux ans, ses propriétés mécaniques n'ont pas varié, malgré une composition minéralogique du liant à priori peu favorable (très riche en oxychlorures).

Les compositions ternaires initiales sont reportées dans le diagramme ternaire (figure 4) sous le n° 1 pour les plaques FA et sous le n° 2 pour les plaques FNA, les références 1' et 2' représentent les compositions ternaires finales comme calculées ci-après.

Il est à noter que la teneur en silice cristallisé a été systématiquement surestimée par l'analyse de diffraction X. En effet, FA donne 60 % (au lieu de 45 %) et FNA 42 % (0,1 de 35,5 %).

En ce qui concerne la composition du liant, par contre, une fois recalculés les pourcentages en poids $MgO$-$MgCl_2$-$H_2O$ à partir des compositions minéralogiques données par l'analyse, on constate qu'ils correspondent aux formulations, mais diminuées d'environ 10 % d'eau. En effet, on mesure une perte

6

d'environ 10 % d'eau au moment de la prise hexothermique. On obtient ainsi l'analyse pour la partie liant du mortier suivante :

Formulation - 10 % $H_2O$

| | | | | | |
|---|---|---|---|---|---|
| FA | périclase | : 28 % | MgO = 58,54 | ⎤ | 58 |
| | brucite | : 10,3 % | $MgCl_2O$ = 11,06 | ⎬ | 12,7 |
| | 5.1.8. | : 61,7 % | $H_2O$ = 30,4 | ⎦ | 29,2 |
| FNA | périclase | : 22 % | MgO = 55,28 | ⎤ | 54,95 |
| | brucite | : 12 % | $MgCl_2$ = 11,86 | ⎬ | 12,01 |
| | 5.1.8. | : 66,2 % | $H_2O$ = 32,83 | ⎦ | 33,03 |

On note que l'espèce minéralogique dominante est l'oxychlorure 5.1.8. qui représente 60 à 66 % de la composition du liant.

La prise est obtenue en 30 min, et la température atteinte est supérieure à 100° C.

Les caractéristiques mécaniques obtenues par des essais de flexion 3 points entre deux appuis distants de 100 mm donnent une contrainte de rupture calculée suivant la formule suivante :

$$C = \frac{3\ F_{max} \times distance\ entre\ appuis}{largeur \times (épaisseur)^2}$$

est de :

18,2 MPa pour la plaque FA

14 MPa pour la plaque FNA.

On peut en outre constater que la plaque FA restée en extérieur pendant 2 ans qui n'a pas subi de dommage apparent montre une résistance en flexion supérieure à la plaque FNA, ce qui confirme la bonne tenue aux intempéries.

Exemple 4 de l'invention

Mortier magnésien au sulfate

Selon cet exemple, on prépare une formulation activée utilisant un coupage de magnésie naturelle et chimique, ainsi que des sulfates partiellement hydratés (environ $2H_2O$ moyenne). A ces deux produits essentiels du liant magnésien selon l'invention, on ajoute des charges siliceuses. On peut obtenir une expansion du produit par ajout d'eau oxygénée (l'augmentation du volume est d'environ 10%).

La formulation du liant magnésien est la suivante :

EP 0 378 010 A1

| Formulation | | % en poids |
|---|---|---|
| 1) magnésie : | - Salins du Midi "active 120" (chimique) | 6 % |
| | - Eraclit ou MG2.150 (naturelle) | 6,5 % |
| 2) sulfate de magnésium, état moyen d'hydratation $2H_2O$ | 23 % $H_2O$ | 42 % |
| 3) Sables siliceux | | 82,3 % |

La magnésie 120 des salins du Midi présente une surface spécifique de 120 $m^2/g$ mesurée par la méthode BET, cette magnésie est très réactive et présente un indice d'iode IAI d'environ 70 mg/g de magnésie, il s'agit d'une magnésie d'origine chimique ("marine") de très haute pureté.

L'Eraclit et la Mg 2.150 présentent une surface spécifique comprise entre 40 et 60 $m^2/g$ et un indice d'iode IAI compris entre 20 et 30 %.

Il s'agit de magnésies naturelles provenant de la calcination de giobertite cryptocristalline.

L'utilisation d'un coupage est préféré car il n'existe actuellement pas sur le marché de magnésie naturelle très réactive (sauf accident de production).

Le gâchage est obtenu comme suit.


Gâchage

- produit sec = 78,5 %
- eau = 20 %
- agent d'expansion ($H_2O_2$ 110 V diluée 1 fois)
+ tensioactif précité = 1,5 %

Le mélange est effectué par injection par une machine à plâtre modifiée opérant le mélange produit sec + eau.

La vitesse de prise dépend de la température extérieure, cette vitesse peut être ajustée en utilisant une eau chaude. Deux essais ont réalisés :
- en été (juin 1986) :
température extérieure = 28° C ;
température de l'eau = 22° C.
On obtient une prise en 15 min avec exothermie.
- en hiver (novembre 1986) :
température extérieure = 5° C
température de l'eau = 45° C.
On obtient également une prise en 15 min avec exothermie.

Le mortier magnésien obtenu, sans agent d'expansion, présente une solubilité faible, principalement en raison d'un pourcentage de 20 % seulement de sel sec.

La résistance mécanique n'est pas très élevée : $R_C$ environ égale à quelques MPa, ce qui n'est pas gênant pour l'usage envisagé (injection dans des corps creux de bâtiments pour améliorer l'isolement acoustique).

La composition minéralogique est celle d'une composition de brucite dont le diagramme de diffraction X est donné à la figure 6. Il faut noter les pics de ce minéral qui sont très larges.

Naturellement, l'invention comprend tous les moyens constituant des équivalents techniques des moyens décrits ainsi que leur diverses combinaisons. Ainsi, la quantité d'eau peut être variée dans certaines limites pour assurer une maniabilité correcte. Il est impératif dans tous les cas d'éviter d'avoir un excès d'eau et pour cela ne pas utiliser une magnésie de granulométrie trop fine (comme certaines magnésies "marines"). En effet, l'excédent d'eau qui sert à assurer le mouillage des grains, et donc la maniabilité du mélange, doit s'évacuer progressivement, ne pouvant être intégrée aux minéraux constitutifs du ciment. Ce séchage progressif peut endommager le matériau par retrait et fissuration, ce phénomène étant amplifié dans le cas de la préparation d'un matériau expansé.

En outre, tous les diagrammes ternaires des figures font partie intégrante de l'invention.

8

On peut additionner au liant hydraulique, lors du gâchage, au moins une charge et/ou au moins un granulat sans limitation de nature : minérale, végétale, organique, et sans limitation de dimension particulaire.

## Revendications

1. Ciment magnésien à prise accélérée constituée essentiellement d'un mélange du type ternaire comprenant comme composants actifs au moins un sel de magnésium et de la magnésie auxquels on ajoute de l'eau de prise, caractérisé en ce que le sel de magnésium est un sel de magnésium partiellement déshydraté, de préférence un sel de magnésium ayant un taux d'hydratation moyen, exprimé en molécules d'eau par molécule de sel de magnésium, compris entre 0 et environ 5, encore de préférence compris entre environ 2 et environ 4.

2. Ciment magnésien selon la revendication 1, caractérisé en ce que la magnésie utilisée est caustique et est très réactive en ayant un indice d'iode supérieur à 30 mg $I_2$/g de magnésie et un $\Delta T < 25°C$ déterminé par un test à l'eau oxygénée.

3. Ciment magnésien selon l'une des revendications 1 ou 2 caractérisé en ce que le sel de magnésium est un chlorure de magnésium ou un sulfate de magnésium, partiellement déshydraté ou anhydre, ou un mélange de sel anhydre et de sel partiellement déshydraté pour obtenir le taux d'hydratation moyen désiré.

4. Liant magnésien obtenu par l'emploi du ciment selon la revendication 1, 2 ou 3, caractérisé en ce que les proportions relatives en sel de magnésium, en magnésie exprimées en périclase et en eau sont définies dans le domaine n° 1, figure 1 délimité par les lettres A-B-C, ou A'-B'-C', respectivement.

5. Liant magnésien selon la revendication 4, caractérisé en ce que les proportions relatives en sel de magnésium, en magnésie et en eau sont comprises dans le domaine restreint n° 2, figure 1 défini par les lettres C-D-E-F.

6. Liant magnésien selon la revendication 4 ou 5, caractérisé en ce qu'il comprend en outre un agent d'expansion.

7. Liant magnésien selon l'une des revendications 4 à 6, caractérisé en ce que l'eau utilisée est voisine de la neutralité, et est éventuellement chauffée.

8. Matériau obtenu avec un liant magnésien tel que défini à l'une quelconque des revendications 1 à 7, à l'état non expansé ou expansé.

9. Matériau selon la revendication 8, caractérisé en ce qu'il contient une charge et/ou un granulat.

10. Procédé de préparation d'un ciment magnésien à prise accélérée constitué essentiellement d'un mélange de type ternaire comprenant comme composants actifs au moins un sel de magnésium, de la magnésie, auxquels on ajoute de l'eau de prise, caractérisé en ce qu'on utilise comme sel de magnésium, un sel de magnésium partiellement déshydraté, de préférence un sel de magnésium ayant un taux d'hydratation moyen, exprimé en molécules d'eau par molécule de sel de magnésium, compris entre 0 et environ 5, encore de préférence compris entre environ 2 et environ 4.

11. Procédé selon la revendication 10, caractérisé en ce qu'on utilise de la magnésie caustique très réactive, ayant un indice d'iode supérieur à 30 mg $I_2$/g de magnésie et un $\Delta T < 25°C$ déterminé par un test à l'eau oxygénée.

9

Fig. 1

Fig. 2

EP 0 378 010 A1

Fig-3

Mortier (E+1)

MgO

Mg(OH)₂

LM 85.14

5.1.8

3.1.8

H₂O

MgCl₂6H₂O

MgCl₂

Fig-4

Mortier (E+3)
I - Composition initiale
    1 : Plaque FA
    2 : Plaque FNA
II - Composition finale
    1': Plaque FA
    2': Plaque FNA

MgO

Mg(OH)₂

2 | 1 2' 1'

5.1.8

3.1.8

H₂O

MgCl₂6H₂O

MgCl₂

1 4.7798 247
2 4.4207 342
3 4.2574
4 3.4749 1160
5 3.3446
6 3.1136 180
7 3.0250 223
8 2.8724 139
9 2.5552 165
10 2.4567 1353
11 2.3704 411
12 2.3341 269
13 2.2807 1187
14 2.2370 649
15 2.2130 166
16 2.1275 1276
17 1.9796 850
18 1.8920 211
19 1.8171 1893

Fig. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.3) |
|---|---|---|---|
| X | AT-B- 317 074 (ÖSTERREICHISCH-AMERIKANISCH MAGNESIT AG) * Revendications; page 2, exemple 1 * | 1,3,8-10 | C 04 B  9/00 |
| A | --- | 4 | |
| X | AT-B- 269 724 (A.N. VASSILEVSKY et al.) * Revendications 1,5; page 5, lignes 31-32; page 4, exemple 1 * | 1,3,10 | |
| X | DE-B-2 932 332 (KALI UND SALZ AG) * Revendications 1-3 * | 1-3,10, 11 | |
| X | AT-B- 358 459 (ÖSTERREICHISCHE HERAKLITH AG) * Revendications 1,2 * | 1,3,10 | |
| A | --- | 7 | |
| X | GB-A-2 049 642 (KALI UND SALZ AG) * Revendications * | 1,3,10 | |
| X | DE-C- 725 877 (I.G. FARBENINDUSTRIE AG) * En entier * | 1,3,8-10 | C 04 B |
| A | DE-C- 832 565 (KALI-FORSCHUNGS-ANSTALT GmbH) --- | | |
| A | DE-C- 173 120 (E. BIDTEL et al.) ----- | | |

**DOMAINES TECHNIQUES RECHERCHES (Int. Cl.3)**

Le présent rapport a été établi pour toutes les revendications

| Lieu de la recherche | Date d'achèvement de la recherche | Examinateur |
|---|---|---|
| LA HAYE | 09-06-1989 | THEODORIDOU E. |